# EUROPEAN PATENT SPECIFICATION

(11) **EP 1 727 318 B1**
(45) Date of publication and mention of the grant of the patent: **06.08.2008**
(21) Application number: 06007360.8
(22) Date of filing: 07.04.2006
(51) Int. Cl.: H04L 12/56, H04L 12/46

(54) **Facilitating computation of role and state information for multiple spanning tree instances**
Vereinfachte Berechnung der Rollen- und Zustandsinformation für Multiple Spanning Tree Instanzen
Simplification du calcul de l'information du role et de l'état pour des instances Multiple Spanning Tree

(30) Priority: 27.05.2005 US 685456 P; 29.03.2006 US 277834
(43) Date of publication of application: 29.11.2006
(73) Proprietor: Alcatel Lucent, 75008 Paris (FR)
(72) Inventor: Rose, Laurence, 91377 Oak Park California (US)
(74) Representative: Schmidt, Werner Karl

(56) References cited:
- US-A1- 2003 169 694
- THE INSTITUTE OF ELECTRICAL AND ELECTRONIC ENGINEERS: "IEEE Std 802.1Q: Virtual Bridged Local Area Networks" IEEE, 7 May 2003 (2003-05-07), pages 168-201, XP002398717 New York

## Description

### FIELD OF THE DISCLOSURE

The disclosures made herein relate generally to implementation of Multiple Spanning Tree Protocol in a computer network and, more particularly, to facilitating computation of role and state information for Multiple Spanning Tree Instances at boundary ports in a network.

### BACKGROUND

Layer two (L2) devices of the Open Systems Interconnection (OSI) reference model are known as "bridges" or "switches" and are controlled by proprietary, standardized L2 (IEEE) and L3 protocols (IETF) protocols. Multiple Spanning Tree Protocol (MSTP) is intended to provide full connectivity while preventing any undesirable loop for frames assigned to any given VLAN throughout a Bridged Local Area Network (LAN). Such a LAN includes arbitrarily interconnected bridges, each operating a respective type or respective types of Spanning Tree Protocol. Examples of such types of spanning tree protocols include, but are not necessarily limited to, Spanning Tree Protocol (STP), Rapid Spanning Tree Protocol (RSTP) and Multiple Spanning Tree Protocol (MSTP). STP is a legacy protocol in accordance with the IEEE 802.1D 1998 standard. RSTP is in accordance with IEEE 802.1D 2004 standard. MSTP is in accordance with the IEEE 802.1Q 2005 standard.

Avoiding loop is one of the most, if not the most, important tasks of a spanning tree protocol. Loop refers to a type of network issue in which data packets continue to be routed in an endless circle among bridges rather than reaching their intended destinations. When loop occurs, communication of information via an affected bridge or bridges quickly becomes very confusing and demanding of processing resources (e.g., central processing unit resources).

MSTP is a Virtual Local Area Network (VLAN) aware implementation of spanning tree protocol, thus allowing frames assigned to different VLANs to follow separate paths. Each path is based on an independent Multiple Spanning Tree Instance (MSTI), within Multiple Spanning Tree (MST) regions composed of LANs and/or MST Bridges. These regions and constituent bridges and/or LANs are connected into a single Common Spanning Tree (CST). The term "instance" refers to a physical tree without loop for a set of VLANs (i.e., in 802.1s implementations there is a set).

An Internal Spanning Tree (1ST) instance runs inside a 802.1s/MSTP region to define the topology for all VLANs mapped to that common instance. This is what extends the CST but inside a region as opposed to outside of the region. The IST instance is always present in regions of a topology. MSTI may also runs inside a region but never extends beyond it.
VLANs may be mapped to a MSTI. A CST instance is a protocol instance that connect all 802.1s regions and all the bridges that do not run 802.1s (i.e., those that run a flat version of STP such as, for example, 802.1D-2004). In fact, the CST instance treats each region as a relatively large virtual bridge. Accordingly, for all practical purposes, the combination of IST and CST yields CIST (i.e., the combined functionality IST and CST).

Spanning tree computation (i.e., roll and state computations) enables each port of a bridge in a network to be assigned a role (e.g., Root, Master Designated, Alternate, Backup or Disabled) and a state (e.g., Learning, Forwarding, or Discarding). The role and state are assigned in accordance with the state machines described in the MSTP standard (i.e., IEEE 802.1Q 2005 standard). A known shortcoming of implementing MSTP in accordance with the IEEE 802.1Q 2005 standard is that the MSTIs related to boundary ports are not always computed when expected, thus producing results that are not as required, desired and/or acceptable. A port of a bridge in a first region that faces a port of a bridge in a second region is disclosed herein to be a boundary port. This unexpected computation condition depends on if the information is received inside a single region or from another region and if the information is "superior". The terms "region" and "superior" as referred to herein are terminology associated with MSTP.

MSTP dictates that "...on a boundary port, the Multiple Spanning tree instances roles must follow the Common and Internal Spanning Tree (CIST) role". CIST and its associated role is defined in the 802.1Q 2005 paragraph 13.13 (Stable Connectivity) as, at Boundary Port, frames allocated to the CIST and all MSTIs are forwarded alike or not forwarded alike. This is because port information assignments are such that if the CIST port information is Root Port the MSTI port information will be Master Port, and if the CIST port information is Designated Port, Alternate Port, Backup Port, or Disabled Port, each MSTI's port information will be the same. Port information is defined herein to include port role information (e.g., a port role) and port state information (e.g., a current state).

However in some particular topology, this MSTP functionality does not always hold true even though the standard state machines are fully and accurately implemented. Furthermore, a loop condition may arise as a result of state machines not always enforcing the abovementioned MSTP functionality. MSTP simulation reveals that, on a boundary port, MSTI roles and states are sometimes not computed concurrently with computation of the CIST ports roles and states. In fact the MSTI roles and states are often computed some time later and the computed MSTI role and state is at least temporarily different than the associated CIST role and state. For example, a MSTI Designated Boundary port in a Discarding state may move to a Forwarding state when states machines are executed, which may undesirably enable a loop condition to arise.

Therefore, facilitating computation of role and state information for MSTIs in a manner that overcomes shortcomings associated with conventional approaches for facilitating computation of role and state information for MSTIs would be useful and advantageous.

### SUMMARY OF THE DISCLOSURE

Embodiments of the present invention enable port information for a boundary port of a network bridge to be computed more effectively. More specifically, embodiments of the present invention provide for port information of MSTIs at a boundary port to be reliably and expectedly computed in concert with and in agreement with an associated CIST. Accordingly, the present invention advantageously overcomes one or more shortcomings associated with conventional approaches for facilitating computation of roles and states for MSTIs at boundary ports of network bridges.

In one embodiment of the present invention, a method comprises an operation of computing port information for one or more Multiple Spanning Tree Instance, MSTI, on a boundary port. The operation of performing the computing for the one or more MSTI is initiated in response to computing of port information for a Common and Internal Spanning Tree, CIST, instance on the boundary port being performed such that the port information for the one or more MSTI is computed each time and effectively at the same time that the port information for the CIST is computed.

Turning now to specific aspects of the present invention, in at least one embodiment, computing port information for one or more MSTI includes initiating Port information Selection state computation for the one or more MSTI immediately after the CIST role is updated within processing of a Superior_Designated state such that expected MSTI port information on the boundary port is computed when expected.

In at least one embodiment of the present invention, an operation and/or state machine system structure is provided for calling a function configured for computing the port information for the one or more MSTI on the boundary port and for calling the function from a CIST Port Information Machine, PIM, Superior_Designated state responsible for facilitating computing of the port information for the CIST.

In at least one embodiment of the present invention, an operation and/or state machine system structure is provided for setting a per bridge Boolean variable to a first value for enabling the computing port information for the one or more MSTI to be performed in accordance with the present invention and for setting the per bridge Boolean variable to a second value different than the first value for disabling computing of port information for the one or more MSTI in accordance with the present invention.

In at least one embodiment of the present invention, computing port information for one or more MSTI includes concurrently computing port information for a plurality of Multiple Spanning Tree Instances, MSTIs.

These and other objects, embodiments, advantages and/or distinctions of the present invention will become readily apparent upon further review of the following specification, associated drawings and appended claims.

### BRIEF DESCRIPTION OF THE DRAWINGS

FIG. 1 is a state diagram showing an expanded view of a prior art state machine system.
FIG. 2 is diagrammatic drawing showing a plurality of regions of a bridge network topology.
FIG. 3 is a state diagram showing the prior art state machine system modified in accordance with the present invention.

### DETAILED DESCRIPTION OF THE DRAWING FIGURES

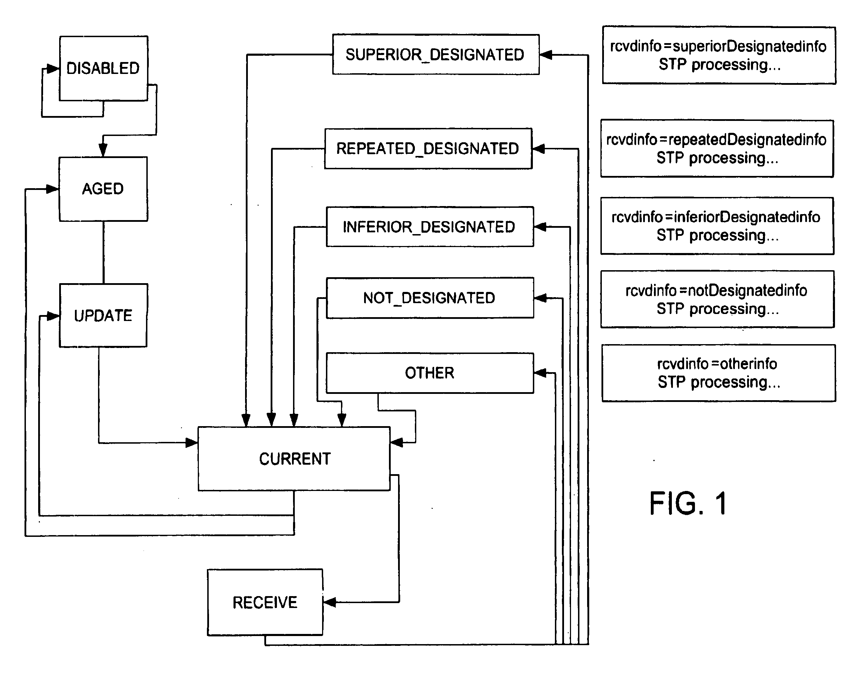

FIG. 1 shows a Port Information Machine (PIM) 100 in accordance with the IEEE 802.1Q 2005 standard, which is also referred to herein as the MSTP standard. In the MSTP standard, one PIM is maintained per Common and Internal Spanning Tree (CIST) instance and per port. In order to preserve clarity in FIG. 1, only the MSTP PIM states names are shown. The text "STP processing..." means that for further details for any state machine, the reader should refer to the IEEE 802.1Q 2005 standard.

The PIM 100 is responsible for recording the Spanning Tree information currently in use by a CIST or a given MSTI for a given port, for aging that information out and for recording the origin of the information in the "infoIs" variable in the PIM 100. The "selected" variable in the PIM 100 is cleared and "reselect" set to signal to an associated Port Role Selection Machine (PRS) that port information need to be recomputed. As is the case for the PIM, there is one PRS per instance and per port responsible for computing ports' roles for that instance.

The functionality of the standard variable "rcvdMsg" used to transition from the CURRENT state in the PIM 100 to the RECEIVE state in the PIM 100 is defined in the setRcvdMsg() function of the MSTP standard as "...Sets rcvdMsg for the CIST, and makes the received CIST message available to the CIST Port Information state machines. Additionally and if and only if rcvdInternal is set, sets rcvdMsg for each and every MSTI for which a MSTI message is conveyed in a Bridge Protocol Data unit (BPDU), and makes available each MSTI message and the common parts of the CIST message priority (the CIST Root Identifier, External Root Path Cost, and Regional Root Identifier) to the Port Information state machine for that MSTI." In accordance with the MSTP standard, each MSTI PIM RECEIVE state leading to PRS role computation for that given MSTI can be entered if and only if the BPDU currently being processed has been received from the same region where it is being processed. The CIST PIM RECEIVE state is always entered, however, because the "rcvdMsg" variable is unconditional for the CIST case.

The condition that PRS role computation for a given MSTI can be entered if and only if the BPDU currently being processed has been received from the same region causes the situation where MSTI role computation can be delayed and not performed correctly and/or as expected. More specifically, if the BPDU is received from the same region and depending on the specific implemented topology, then MSTI role computation is performed at the desired time in accordance with the MSTI requirement that on a boundary port, the MSTI roles must follow the CIST roles.

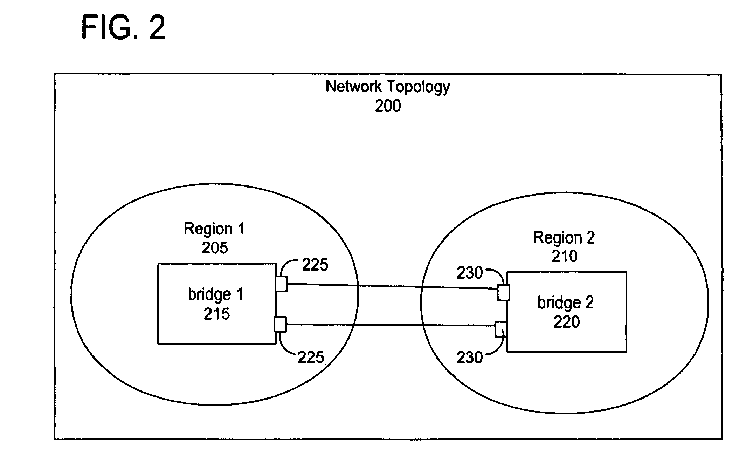

As shown in FIG. 2, a network topology 200 in accordance with known structure includes a first region 205 and a second region 210. The network topology 200 is a "worst case" topology with respect to consequences stemming from the condition that PRS role computation for a given MSTI can be entered if and only if a BPDU currently being processed has been received from the same region causing the situation where MSTI role computation can be delayed and not performed correctly. The network topology 200 includes a first bridge 215 that resides within the first region 205 and a second bridge 220 that resides within the second region 210. The first bridge 215 includes ports 225 that face ports 230 of the second bridge 220. A port of a bridge in a first region that faces a port of a bridge in a second region is disclosed herein to be a "boundary port". Accordingly, the ports 225 of the first bridge 215 and the ports 230 of the second bridge 220 are boundary ports.

Referring now to FIGS. 1 and 2, in the network topology 200, each bridge (215, 220) receives information that is considered always "external", meaning that it comes from another region. Therefore, the standard per instance variable "rcvdInternal" of the PIM is only set for the CIST and will never be set for any of the MSTIs. For that exact reason, PRS functionality is never launched on any MSTI. It also means that the role of each port in each MSTI remains Desigated Discarding, which is the initial state, for a prescribed period of time equal to the Bridge Forward Delay variable, defined in the 802.1D 2004 standard's performance parameter chapter. After the period of time passes (e.g., 15 seconds), converging to Forwarding is considered to be safe, in the legacy standard 802.1D 1998 and in all subsequent standards. Thus, all ports that are Designated Discard for at least the prescribed period of time may become Designated Forward. Unfortunately, with respect to the network topology 200, such role and state settings may result in a loop in the topology because all four ports become Designated Forwarding in all MSTIs. Only the CIST computation is safe because roles computation is correctly triggered. Basically, the requirement that the Multiple Spanning tree instances roles must follow the CIST role on a boundary port is defeated in this particular scenario in exactly implementing the states machines the way they are described in the 802.1Q standard.

Turning now to specific discussion of implementing the present invention, the present invention enhances standard MSTP functionality with non-standard (i.e., add-on) functionality. One or more states machines are modified so that, on a boundary port, MSTI port information computation is triggered (i.e., initiated) each time CIST role computation is triggered. In this manner, the computation results reliably match that of the CIST role computation.

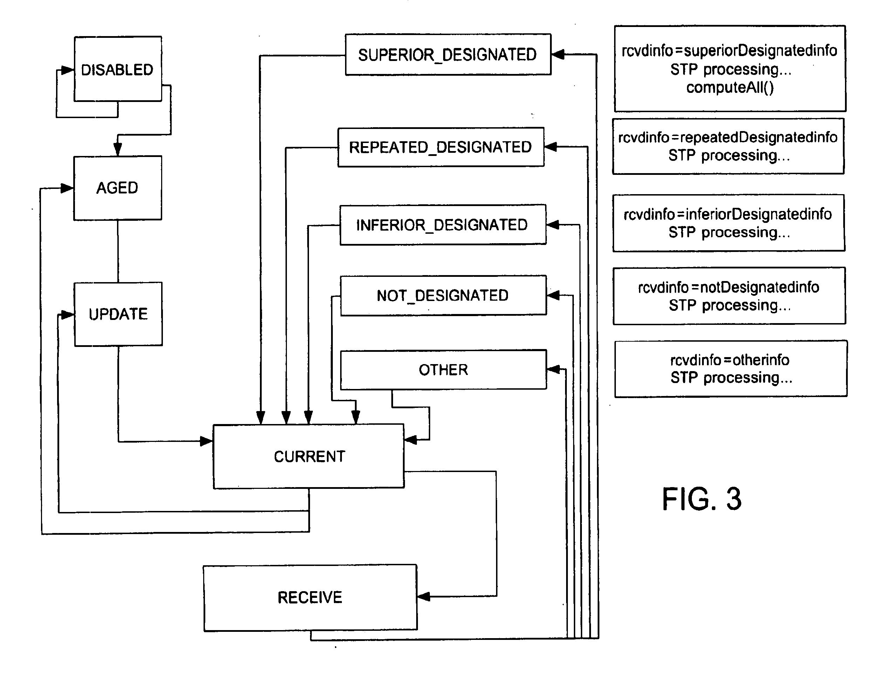

In accordance with the present invention and as depicted in FIG. 3, a function referred to herein as "computeAll()" is added in the SUPERIOR_DESIGNATED state inside a PIM state machine of a state machine system. The location of the computeAll() function is inside the SUPERIOR_DESIGNATED state and its location within this state is independent of the underlying behavior of the implementation. This is because the MSTP standard specifies that state machine processing must be finished entirely before initiating any other state machine processing. The computeAll() function is discussed below in greater detail.

Also in accordance with the present invention, a Boolean variable referred to herein as "completeComputation" is optionally provided in the PIM of each bridge. Hence, the completeComputation Boolean variable is a per-bridge Boolean variable. The completeComputation Boolean variable is selectively settable between a setting for enabling the computeAll() function and a setting for disabling the computeAll() function. For example, a system administrator may set the completeComputation Boolean variable to a "true" setting for enabling the computeAll() function and to a "false" setting for disabling the computeAll() function (e.g., for enabling standard bridge functionality). Alternatively, where it is elected to implement the computeAll() function but not implement a means for selectively activating the computeAll() function (e.g., through use of the completeComputation Boolean variable), a bridge is configured for the computeAll() function always being enabled. In one embodiment, the completeComputation Boolean variable is located in the RECEIVE state. However, the completeComputation Boolean variable may be located elsewhere.

In addition to implementation of the completeComputation Boolean variable, Bridge parameters referred to as Performance Parameters in STP standards may be modified. Because no information is received but rather a Performance Parameter is changed, the PIM is not entered as a result of BPDUs not being received. However, a management operation is carried out on STP parameters (i.e., the Performance Parameters). Thus, the computeAll() function presented above also applies simply in view of the modifications to the Performance Parameters. In order to have the boundary port information computed correctly for all instances when a management operation occurs, the spanning tree priority vectors and Port information assignments for a bridge shall be recomputed for all instances (i.e., the CIST and each MSTI) as specified by the operation of the PRS state machine by clearing a setting of "selected" and thereafter setting the setting to "reselect" for certain ports on a bridge. These certain ports refers to all ports when the CIST Bridge Identifier Priority parameter is modified, or a given port when Port Identifier Priority parameter is modified with respect to parameter settings specified in a conventional STP standard. For example, if the Bridge Identifier Priority parameter of a given MSTI is changed, PRS needs only be recomputed for all bridge's ports for the given MSTI. Similarly, changing External Port Path Cost for a given port means recompute PRS for all instances for this given port.

When the computeAll function is enabled on a bridge of a first region and the current processing applies for a CIST at a boundary port of the bridge of the first region, reception of a data transmission packet at a first region that was transmitted from a second region causes the computeAll() function to be called from Superior _Designated state of the CIST Port Information Machine (PIM) responsible for facilitating computing of port information for the CIST. The computeAll() function is then initiated (i.e., activated for a current round of computation). Once the computeAll() function is initiated, it sets the 802.1s variable "reselect" to true and the 802.1s variable "selected" to false for all MSTIs on the boundary port. This computeAll() functionality results in the PRS state machine being initiated for all of the MSTIs on the boundary port in response to the CIST role being updated within processing of the SUPERIOR_DESIGNATED state. Accordingly, the expected MSTI roles on the boundary port are computed concurrent with the CIST being updated.

The benefit of the computeAll() functionality in accordance with the present invention is that it precludes certain situations that undesirably gives rise to a loop condition. In conventionally implementing MSTP according to the IEEE 802.1Q 2005 standard, the MSTIs related to boundary ports are not always computed when expected, which sometimes gives rise to a loop condition. ComputeAll() functionality in accordance with the present invention facilitates computation of MSTI roles and states on boundary ports being concurrently computed with CIST roles and states of the same boundary ports. For example, computeAll() functionality in accordance with the present invention may be initiated in response to computation of the CIST roles and states of a boundary port such that computation of MSTI roles and states on boundary ports is performed in parallel with computation of the CIST roles and states on the boundary ports. In doing so, the potential for loop to occur is reduced, if not eliminated.

The following process as well as the following features, separately or in any combination, may also constitute advantageous embodiments of the described or claimed invention:
The claimed and/or described method, further comprising: setting a per bridge Boolean variable to a first value for enabling said PRS state computation for said MSTI to be performed; and setting the per bridge Boolean variable to a second value different than the first value for disabling said computing of port information for said MSTIs;
The claimed and/or described method wherein said computing port information for said MSTIs includes concurrently computing said port information for said MSTIs;
The claimed and/or described method, further comprising: calling a function configured for computing port information for said MSTIs on the boundary port, wherein the function is called from said PIM Superior _Designated state of the CIST responsible for facilitating computing of said port information for the CIST; setting a per bridge Boolean variable to a first value for enabling said PRS state computation for said MSTI to be performed; and setting the per bridge Boolean variable to a second value different than the first value for enabling computing of port information to be carried out in a manner different than said PRS state computation for said MSTIs;
The claimed and/or described method wherein initiating PRS state computation for said MSTIs includes initiating Port information Selection state computation for said MSTIs immediately after a CIST role is updated within processing of a Superior_Designated state such that expected MSTI port information on the boundary port is computed when expected;
A state machine process, comprising: a Port Information Machine (PIM)including a state configured for initiating Multiple Spanning Tree Instance (MSTI) port information computation on a boundary port in response to a Common and Internal Spanning Tree (CIST) port information computation being initiated on the boundary port such that said MSTI port information computation is performed each time and effectively at the same time that said CIST port information computation is being performed;
The claimed and/or described process wherein said computing port information for said at least one MSTI includes initiating Port information Selection state computation for said at least one MSTI immediately after the CIST role is updated within processing of a Superior_Designated state such that expected MSTI port information on the boundary port is computed when expected;
The claimed and/or described process, further comprising: a function configured for computing said port information for said at least one MSTI on the boundary port, wherein the function is called from a CIST Port Information Machine (PIM) Superior _Designated state responsible for facilitating computing of said port information for the CIST;
The claimed and/or described process, further comprising: a per bridge Boolean variable settable to a first value for enabling said computing for at least one MSTI to be performed and settable to a second value different than the first value for disabling computing of port information for said at least one MSTI;
The claimed and/or described process wherein said computing port information is performed concurrently for a plurality of Multiple Spanning Tree Instances (MSTIs) on the boundary port;
The claimed and/or described process, further comprising: a function configured for computing said port information for each one of said MSTIs, wherein the function is called from a CIST Port Information Machine (PIM) Superior _Designated state responsible for facilitating computing of said port information for the CIST; and a per bridge Boolean variable settable to a first value for enabling said computing for said at least one MSTI to be performed and settable to a second value different than the first value for disabling said computing of port information for said at least one MSTI.

In the preceding detailed description, reference has been made to the accompanying drawings that form a part hereof, and in which are shown by way of illustration specific embodiments in which the present invention may be practiced. These embodiments, and certain variants thereof, have been described in sufficient detail to enable those skilled in the art to practice embodiments of the present invention. It is to be understood that other suitable embodiments may be utilized and that logical, mechanical, chemical and electrical changes may be made.

## Claims

1. A method, comprising:
computing port information for at least one Multiple Spanning Tree Instance, MSTI, on a boundary port (225, 230), **characterized in that**
performing said computing for said at least one MSTI is initiated in response to computing of port information for a Common and Internal Spanning Tree, CIST, instance on the boundary port (225, 230) being performed such that said port information for said at least one MSTI is computed each time and effectively at the same time that said port information for the CIST is computed.

2. The method of claim 1 wherein said computing port information for said at least one MSTI includes initiating Port information Selection state computation for said at least one MSTI immediately after the CIST role is updated within processing of a Superior_Designated state such that expected MSTI port information on the boundary port is computed when expected.

3. The method of claim 1 or claim 2, further comprising:
calling a function configured for computing said port information for said at least one MSTI on the boundary port, wherein the function is called from a CIST Port Information Machine, PIM, Superior_Designated state responsible for facilitating computing of said port information for the CIST.

4. The method of any one of claims 1 to 3, further comprising:
- setting a per bridge Boolean variable to a first value for enabling said computing for said at least one MSTI to be performed; and
- setting the per bridge Boolean variable to a second value different than the first value for disabling said computing of port information for said at least one MSTI.

5. The method of claim 1 wherein said computing port information for at least one MSTI includes concurrently computing port information for a plurality of Multiple Spanning Tree Instances, MSTIs.

6. The method of claim 5, further comprising:
- calling a function configured for computing said port information for said plurality of MSTIs on the boundary port, wherein the function is called from a CIST PIM Superior_Designated state responsible for facilitating computing of said port information for the CIST;
- setting a per bridge Boolean variable to a first value for enabling said computing for said plurality of MSTIs to be performed; and
- setting the per bridge Boolean variable to a second value different than the first value for disabling said computing of port information for said plurality of MSTIs.

7. The method of claim 6 wherein said computing port information for said plurality of MSTIs includes initiating Port information Selection state computation for each one of said MSTIs immediately after the CIST role is updated within processing of a Superior_Designated state such that expected MSTI port information on the boundary port is computed when expected.

## Patentansprüche

1. Ein Verfahren, welches umfasst:
Berechnung von Portinformation für mindestens eine Multiple Spanning-Tree-Instanz, MSTI, an einem Boundary-Porf (225, 230), **dadurch gekennzeichnet, dass**
das Ausführen der besagten Berechnung für die besagte mindestens eine MSTI im Anschluss an die Berechnung der Portinformation für eine Common- und Internal Spanning-Tree-Instanz, CIST, auf dem Boundary-POrt (225, 230) initiiert wird, so dass die besagte Portinformation für die besagte mindestens eine MST jedes Mal und effektiv zu demselben Zeitpunkt wie die besagte Portinformation für die CIST berechnet wird.

2. Das Verfahren nach Anspruch 1, worin die besagte Berechnung der Portinformation für die besagte mindestens eine MSTI das initiieren der Berechnung des Portinformation-Auswahlzustands für die besagte mindestens eine MSTI sofort nach der Aktualisierung der CIST-Rolle während der Bearbeitung eines Superior_Designated-Zustands umfasst, so dass die vorgesehene MSTI-Portinformation am Boundary-Port zum vorgesehenen Zeitpunkt berechnet wird.

3. Das Verfahren nach Anspruch 1 oder 2, weiterhin umfassend:
Aufrufen einer Funktion, die für die Berechnung der besagten Portinformation für die besagte mindestens eine MSTI auf dem Boundary-Port konfiguriert ist, wobei die Funktion von einer CIST Portinformation-Maschine, PIM, Superior_Designated-Zustand, aufgerufen wird, welche für die vereinfachte Berechnung der besagten Portinformation für die CIST zuständig ist.

4. Das Verfahren nach einem beliebigen der Ansprüche 1 bis 3, weiterhin umfassend:
- Setzen einer Per-Bridge Booleschen Variablen mit einem ersten Wert, um das Ausführen der besagten Berechnung für die besagte mindestens eine MSTI zu ermöglichen: und
- Setzen einer Per-Bridge Booleschen Variablen mit einem zweiten Wert, welcher sich von dem ersten Wert unterscheidet, um die besagte Berechnung der Portinformation für die besagte mindestens eine MSTI zu deaktivieren.

5. Das Verfahren nach Anspruch 1, worin die besagte Berechnung der Portinformation für mindestens eine MSTI die gleichzeitige Berechnung der Portinformation für eine Vielzahl von Multiple Spanning-Tree-Instanzen, MSTI, umfasst.

6. Das Verfahren nach Anspruch 5, weiterhin umfassend:
- Aufrufen einer Funktion, die für die Berechnung der besagten Portinformation für die besagte Vielzahl von MSTIs auf dem Boundary-Port konfiguriert ist, wobei die Funktion von einer CIST Portinformation-Maschine, PIM, Superior_ Designated-Zustand, aufgerufen wird, welche für die vereinfachte Berechnung der besagten Portinformation für die CIST zuständig ist.
- Setzen einer Per-Bridge Booleschen Variablen mit einem ersten Wert, um das Ausführen der besagten Berechnung für die besagte Vielzahl von MSTIs zu ermöglichen; und
- Setzen einer Per-Bridge Booleschen Variablen mit einem zweiten Wert, welcher sich von dem ersten Wert unterscheidet, zum die besagte Berechnung der Portinformation für die besagte Vielzahl von MSTIs zu deaktivieren.

7. Das Verfahren nach Anspruch 6, worin die besagte Berechnung der Portinformation für die besagte Vielzahl von MSTIs das Initiieren der Berechnung des Portinformation-Auswahlzustands für eine jede der besagten MSTIs sofort nach der Aktualisierung der CIST-Rolle während der Bearbeitung eines Superior_Designated-Zustands umfasst, so dass die vorgesehene MSTI-Portinformation am eoundary-Port zum vorgesehenen Zeitpunkt berechnet wird.

## Revendications

1. Procédé comprenant :
le calcul d'une information de port pour au moins une instance ST multiple, MSTI, sur un port frontière (225, 230), **caractérisé en ce que**
l'exécution dudit calcul pour ladite au moins une MSTI est initié en réponse à l'exécution du calcul d'une information de port pour une instance ST commune et interne, CIST, sur le port frontière (225, 230) de telle sorte que ladite information de port pour ladite au moins une MSTI soit calculée chaque fois et exactement en même temps que ladite information de port est calculée pour la CIST.

2. Procédé selon la revendication 1, dans lequel ledit calcul de l'information de port pour ladite au moins une MSTI comprend l'initiation d'un calcul d'état de sélection d'information de port pour ladite au moins une MSTI immédiatement après que le rôle de la CIST est mis à jour lors du traitement d'un état Désigné_Supérieur de telle sorte que l'information de port de MSTI prévue sur le port frontière soit calculée au bon moment.

3. Procédé selon la revendication 1 ou 2, comprenant en outre :
l'appel d'une fonction configurée pour calculer ladite information de port pour ladite au moins une MST1 sur le port frontière, dans lequel la fonction est appelée depuis une machine d'information de port, PIM, de la CIST, l'état Désigné_Supérieur étant destiné à faciliter le calcul de ladite information de port pour la CIST.

4. Procédé selon l'une quelconque des revendications 1 à 3, comprenant en outre :
l'établissement d'une variable booléenne par pont à une première valeur pour activer l'exécution dudit calcul pour ladite au moins une MSTI, et
l'établissement de la variable booléenne par pont à une seconde valeur différente de la première valeur pour désactiver ledit calcul d'information de port pour ladite au moins une MSTI.

5. Procédé selon la revendication 1, dans lequel ledit calcul d'information de port pour au moins une MSTI comprend le calcul simultané d'une information de port pour une pluralité d'instances ST multiples, MSTI.

6. Procédé selon la revendication 5, comprenant en outre :
l'appel d'une fonction configurée pour calculer ladite information de port pour ladite pluralité de MSTI sur le port frontière, dans lequel la fonction est appelée depuis une PIM de la CIST, l'état Désigné_Supérieur étant destiné à faciliter le calcul de ladite information de port pour la CIST ;
l'établissement d'une variable booléenne par pont à une première valeur pour activer l'exécution dudit calcul pour ladite pluralité de MSTI ; et
l'établissement de la variable booléenne par pont à une seconde valeur différente de la première valeur pour désactiver ledit calcul d'information de port pour ladite pluralité de MSTI.

7. Procédé selon la revendication 6, dans lequel ledit calcul de l'information de port pour ladite pluralité de MSTI comprend l'initiation d'un calcul d'état de sélection d'information de port pour chacune desdites MSTI immédiatement après que le rôle de la CIST est mis à jour lors du traitement d'un état Désigné_Supérieur de telle sorte que l'information de port de MSTI prévue sur le port frontière soit calculée au bon moment.
